Europäisches Patentamt

European Patent Office

Office européen des brevets

(11) Publication number: **0 053 417**
**B1**

(12) **EUROPEAN PATENT SPECIFICATION**

(45) Date of publication of patent specification: **16.05.84**

(21) Application number: **81201288.8**

(22) Date of filing: **20.11.81**

(51) Int. Cl.³: **B 21 D 43/00,** B 21 D 43/02, B 23 Q 3/18, B 23 B 31/16

(54) Apparatus for forming a peripheral flange on a flat disc.

(30) Priority: **01.12.80 NL 8006521**

(43) Date of publication of application:
**09.06.82 Bulletin 82/23**

(45) Publication of the grant of the patent:
**16.05.84 Bulletin 84/20**

(84) Designated Contracting States:
**BE DE FR GB LU SE**

(56) References cited:
**DE-A- 110 694**
**DE-A- 642 441**
**DE-A-2 040 730**
**GB-A-1 532 396**

(73) Proprietor: **HOOGOVENS GROEP B.V.**
**P.O. Box 10.000**
**NL-1970 CA IJmuiden (NL)**

(72) Inventor: **Vos, Barthold Ulfert**
**Borgerdiep 9**
**Zaandijk (NL)**

(74) Representative: **van Buytene, Arie Jacobus et al**
**p/a Hoogovens Groep B.V. P.O.Box 10.000**
**NL-1970 CA IJmuiden (NL)**

Courier Press, Leamington Spa, England.

# Description

The invention relates to apparatus for forming a peripheral flange on a flat disc of sheet material, comprising a support for the disc which is stepwise rotatable about an axis by a stepping mechanism, clamping means for clamping the disc to the support, a shear for cutting a radial slit in the circumference of the disc after each step in the rotation of the support so as to form a plurality of radial slits, bending means for bending, out of the plane of the disc, the area of the disc material between each adjacent pair of said slits so that said areas together form the flange, means for centering the disc on the support before clamping so that the centre of the disc coincides with the said axis of rotation of the support.

Apparatus of this kind is known from British Patent Specification 1532396. The particular purpose of the apparatus is to provide a flanged disc of sheet material, for instance thin sheet steel, for use as the end cover in the protective packing of a coil of steel strip. This type of packing is described fully in GB 1532396. The apparatus may be adjusted in correspondence with the diameter of the coil to be packed. This is effected by moving the notching shear and bending device radially on slides.

If the circular disc is provided with a concentric coiler hole, the centering of the disc on the support platform does not present any problems. The situation alters, however, if, as is sometimes required for packing purposes, a flange needs to be produced without a coiler hole. The invention aims to provide apparatus of the type described here in which centering may easily be accomplished.

The invention is set out in the claims.

In this way it is possible for all types of disc, with or without a centre hole, to be simply and rapidly centred on the support platform.

An embodiment of the apparatus is illustrated in the accompanying drawing and will now be described with reference thereto, by way of example.

Fig. 1 is a schematic top view of the apparatus embodying the invention for making a flange for packing a coil of steel strip from a disc.

Fig. 2 is a side and Fig. 3 a front view of the notching shear with two sensors employed in the apparatus of Fig. 1.

Fig. 4 shows the attachment of the centering roller to the chain in the apparatus of Fig. 1.

Fig. 5 shows the tensioner incorporated into the chain, in the apparatus of Fig. 1.

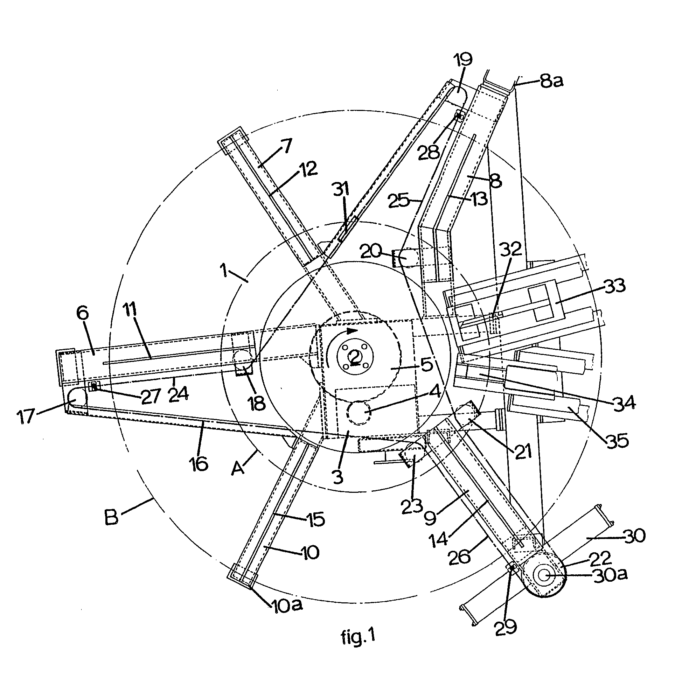

The apparatus as shown in Fig. 1 has a horizontal, round support platform 1 which can be progressively rotated around a vertical axis 2 in a clockwise direction by means of a stepping mechanism 3 which is shown by a dotted line under the platform 1 and which has the pinion 4 in mesh with the cog wheel 5 coupled to the axle 2. A complete revolution of the platform 1 may for example consist of 36 steps each of 10 degrees.

The platform 1 and the drive mechanism are attached to a frame which stands on legs on the factory floor. The frame comprises among other things, a number of beams 6, 7, 8, 9 and 10 extending horizontally from the platform 1. Each of these beams is provided in the centre of its upper surface with a narrow horizontal ridge numbered 11, 12, 13, 14 and 15 respectively, to provide a bearing surface for the disc to be worked on. The minimum diameter permitted for this disc is indicated by chain-dot circle A, and the maximum diameter indicated by the chain-dot circle B.

A disc positioned on the support platform 1 and the support ridges 11 to 15 may be fastened with respect to the revolving platform 1 by means of a clamping disc — not drawn in Fig. 1 but to be imagined above the plane of the drawing — which is attached by means of a pneumatic cylinder to a gantry construction resting on the legs 8a and 10a extending from beams 8 and 10 in such a way that, when the aforementioned cylinder is activated, the disc to be worked on is held tightly in place and performs all the stepping movements together with the platform 1. The clamping disc is able to rotate with the platform 1. This method of clamping enables discs of varying diameters with or without a centre hole to be held tightly in place.

Before the disc positioned on the table 1 and the bearing ridges 11 to 15 is clamped into place, however, it is necessary for the disc to be centered relative to the axis 2. For this purpose, a three-point centering mechanism is fitted, in which the three points are always located at the three vertices of an equilateral triangle the sides of which may vary but the centre of gravity of which is always located at the centre line of the axis 2. This mechanism consists of an endless chain 16 which is arranged beneath the upper surface of the beams around sprocket wheels 17, 18, 19, 20, 21 22 and 23 attached to these beams and approximately has the shape of a three pointed star. The corresponding sides 24, 25 and 26 of this star between the sprocket wheels 17 and 18, 19 and 20, 22 and 23 respectively extend radially towards the centre of the axis 2 and furthermore are spaced from each other at 120° around the axis 2. These three sides 24, 25 and 26 of the chain 16 are respectively connected, at equal distances from the axis 2, to three upright pins numbered 27, 28 and 29 respectively. These pins are designed as vertical rotatable rollers and are mounted in bearings of synthetic plastics material.

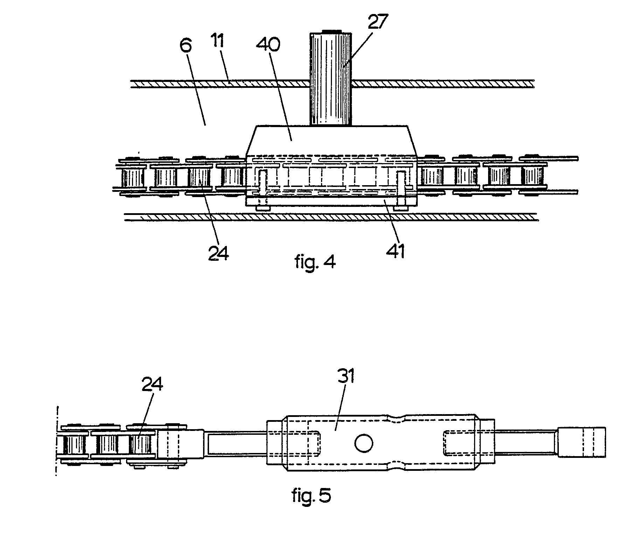

Fig. 4 shows how a roller of this nature (27, 28 or 29) is attached to the chain 16, namely by means of an inverted, U-shaped clamping frame 40 which is clamped onto the chain by an adjustable block 41 and bolts to go with it.

The chain 16 is driven by a pneumatically operated cylinder 30 which effects rotation of its vertical projecting axle 30a. The axle 30a carries the driving gear 22. A chain tensioner 31 is incorporated into the section of the chain located between the widest spaced sprocket wheels 18 and 19 so that the tensioner 31 never needs to run over a wheel as the chain 16 moves backwards and forwards. Details of this tensioner 31, which is otherwise conventional in nature, are shown in Fig. 5, and do not require any further explanation.

When the cylinder 30 is activated, the chain 16 is first moved to the right so that the pins 27, 28 and 29 move towards the centre at the same time and at the same speed and thereby take the positioned disc with them, and thereby centre it on the axis 2. As soon as this has happened, the power of the cylinder 30 is reversed by the operator using a push-button control, so that pins 27, 28 and 29 move back outwards to occupy the original position shown in Fig. 1.

The adjustable block incorporated into the section of chain 26 (Fig. 1) is provided with a laterally projecting lug (not shown) to operate a limit switch to switch off the power to the rotating cylinder 30 as the chain moves backwards as described.

Once centering has been completed, the aforementioned clamping devices is activated and the stepping movement commences.

A pneumatically operated notching shear 32 is mounted on a radially movable slide 33 so that the shear 32 can be adjusted to notch the circumference of discs of varying diameters. The shear 32 can make a radial incision of for example 10 centimetres in length in the centered and clamped disc; the successive incisions which are made as the disc is progressively rotated result in a number, for example 36, of radially outwardly extending strips on the circumference of the disc.

The shear 32 is succeeded, in the direction of rotation, by a bending device 34 at an odd multiple of half the stepping distance, this bending device being mounted radially movably on a slide 35 to allow adjusting of the bending device 34 to the various disc diameters. The two slides 33 and 35 are movable simultaneously and at the same speed.

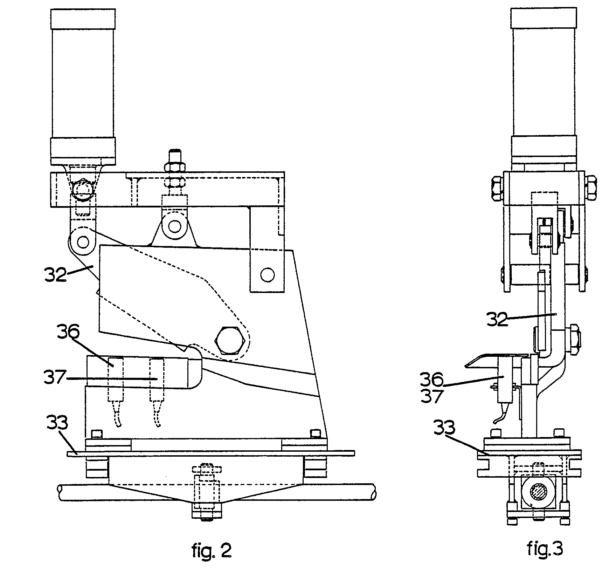

To show whether a disc of the correct diameter has been presented to the device, two sensors 36 and 37 (designed as approximation switches) are mounted radially on the slide 33 of the notching shear 32 to ascertain the presence of a positioned and centered disc under the notching shear, and also whether it has been correctly centered and has the correct diameter (too large/too small). This is shown in more detail in Figs. 2 and 3.

### Claims

1. Apparatus for forming a peripheral flange on a flat disc, of sheet material, comprising a support (1) for the disc which is stepwise rotatable about an axis (2) by a stepping mechanism (3), clamping means for clamping the disc to the support (1), a shear (32) for cutting a radial slit in the circumference of the disc after each step in the rotation of the support so as to form a plurality of radial slits, bending means (34) for bending, out of the plane of the disc, the area of the disc material between each adjacent pair of said slits so that said areas together from the flange, means for centering the disc on the support (1) before clamping so that the centre of the disc coincides with the said axis (2) of rotation of the support (1), characterized in that the means comprises a three-point centering mechanism, based on the principle known per se according to which the three points are always located at the three vertices of an equilateral triangle the sides of which may vary but the centre of gravity of which is always located at the centre line of the axis (2) of the support (1), which mechanism consists of an endless chain (16) which is arranged beneath the upper surface of beams (6, 7, 8, 9 and 10) extending horizontally from the supporting platform (1) and around sprocket wheels (17, 18, 19, 20, 21 22 and 23) attached to these beams and approximately has the shape of a three pointed star, of which three corresponding sides (24, 25 and 26) between the minimum diameter (A) and the maximum diameter (B) for the disc to be worked on extend radially towards the centre of the axis (2) of rotation of the platform (1) and furthermore are spaced from each other at 120° around the axis (2), which three radially extending sides (24, 25 and 26) of the chain (26) are respectively connected at equal distances from the axis (2) to three upright pins (27, 28 and 29) as centering elements for the disc, and which endless chain (16) is driven by a reversible cylinder (30) at one vertex (at 22) of the three pointed star.

2. Apparatus according to claim 1, characterized in that the pins (27, 28 and 29) are rollers made of metal and mounted in plastics material bearings.

3. Apparatus according to claim 1 and 2, characterized in that two sensors (36, 37) are mounted adjacent the shear (32), to provide an indication whether the disc is correctly centered and/or is of correct diameter.

### Patentansprüche

1. Vorrichtung zum Anformen eines umlaufenden Flansches an einer flachen Scheibe aus Blechmaterial mit einer schrittweise durch ein Schrittschaltwerk (3) um eine Achse (2) drehbaren Auflage (1) für die Scheibe, einer Klemmvorrichtung zum Festklemmen der Scheibe an der Auflage, einer Schere (32) zum Einschneiden eines radialen Schlitzes in den Umfang der Scheibe nach jedem Drehschritt der Auflage, um so eine Vielzahl von radialen Schlitzen zu formen, einer Biegeeinrichtung (34) zum Biegen der Fläche des Scheibenmaterials zwischen jeweils einem benachbarten Paar von Schlitzen aus der Scheibenfläche heraus, so daß diese Flächen zusammen den Flansch bilden, und einer Einrichtung zum Zentrieren der Scheibe auf der Auflage (1) vor dem Festklemmen, so daß der Mittelpunkt der Scheibe in der Drehachse (2) der Auflage liegt, dadurch gekennzeichnet, daß die Einrichtung einen Dreipunkt-Zentriermechanismus umfaßt, welcher auf dem an sich bekannten Prinzip beruht, nach welchem die drei Punkte immer an den drei Scheitelpunkten eines gleichseitigen Dreiecks liegen, dessen Seiten sich ändern können, dessen Schwerpunkt jedoch immer auf der Mittellinie der Achse (2) der Auflage liegt, wobei der Mechanismus aus einer endlosen Kette (16) besteht, welche unter dem Oberseite von sich horizontal von der Auflage (1) erstreckenden Tragarmen (6, 7, 8, 9 und 10) und um an diesen Tragarmen befestigte Zahnräder (17, 18, 19, 20, 21, 22 und 23) herum angeordnet ist und annähernd die Gestalt eines dreizackigen Sternes aufweist, von welchem drei korrespondierende Seiten (24, 25 und 26) zwischen dem Mindestdurchmesser (A) und dem Höchstdurchmesser (B) für die darauf zu bearbeitende Scheibe sich radial zum Mittelpunkt der Drehachse (2) der Auflage-Plattform (1) erstrecken und gegeneinander jeweils um 120° bezüglich der Achse (2) versetzt sind, wobei die drei sich radial erstreckenden Seiten (24, 25 und 26) der Kette (16) jeweils in gleichen Abständen von der Achse (2) mit drei nach oben abstehenden Stiften (27, 28 und 29) als Zentrierelementen für die Scheibe verbunden sind und wobei die endlose Kette (16) mittels eines drehbaren Zylinders (30) an einem Scheitelpunkt (bei 22) des dreizackigen Sterns angetrieben wird.

2. Vorrichtung nach Anspruch 1, dadurch gekennzeichnet, daß die Stifte (27, 28 und 29) als Rollen aus Metall ausgebildet und in Kunststofflagern gehalten sind.

3. Vorrichtung nach Anspruch 1 oder 2, dadurch gekennzeichnet, daß zwei Fühler (36, 37) in der Nähe der Schere (32) daß zwei Fühler (36, 37) in der Nähe der Schere (32) angeordnet sind, um anzuzeigen, ob die Scheibe richtig zentriert ist und/oder den richtigen Durchmesser aufweist.

**Revendications**

1. Appareil destiné à former un rebord périphérique sur un disque plat de matière en feuille, comprenant un support (1) pour le disque pouvant tourner pas à pas autour d'un axe (2) par un mécanisme pas à pas (3), un dispositif de bridage pour brider le disque sur le support (1), une cisaille (32) pour couper une fente radiale dans la circonférence du disque après chaque pas de rotation du support, de manière à former plusieurs fentes radiales, un dispositif de pliage (34) destiné à plier en dehors du plan du disque, la région de la matière du disque entre chaque paire voisine desdites fentes afin que lesdites régions ensemble forment le rebord, un dispositif de centrage du disque sur le support (1) avant son bridage de manière que le centre du disque coïncide avec ledit axe (2) de rotation de support (1), caractérisé en ce que le dispositif comporte un mécanisme de centrage trois points basé sur le principe connu selon lequel les trois points sont toujours situés aux trois sommets d'un triangle équilatéral dont les côtés peuvent varier mais dont le centre de gravité est toujours situé sur la ligne de l'axe (2) du support (1), ce mécanisme consistant en une chaîne sans fin (16) qui est disposée au-dessous de la surface supérieure de longerons (6, 7, 8, 9, et 10) s'étendant horizontalement par rapport à la plateforme support (1) et autour de roues dentées (17, 18, 19, 20, 21, 22, 23) montées sur ces longerons et avec approximativement la forme d'une étoile à trois pointes dont trois côtés correspondants (24, 25 et 26) entre le diamètre minimal (A) et le diamètre maximal (B) pour le disque à usiner s'étendent radialement vers le centre de l'axe (2) de rotation de la plateforme (1) et sont en outre espacés les uns des autres de 120° autour de l'axe 2, les trois côtés disposés radialement (24, 25 et 26) de la chaîne (16) étant accouplés respectivement à distances égales de l'axe (2) avec trois broches verticales (27, 28 et 29) comme des éléments de centrage du disque, et la chaîne sans fin (16) étant entraînée par un cylindre réversible (30) à un sommet (22) de l'étoile à trois pointes.

2. Appareil selon la revendication 1, caractérisé en ce que les broches (27, 28 et 29) sont des galets en métal et montés dans des paliers en matière plastique.

3. Appareil selon les revendications 1 et 2, caractérisé en ce que deux capteurs (36, 37) sont montés près de la cisaille (32) et donnent une indication si le disque est correctement centré et/ou de diamètre correct.

fig.1

fig. 2

fig. 3

0 053 417

fig. 4

fig. 5

3